# DEMANDE DE BREVET EUROPEEN

(11) **EP 0 857 690 A1**
(43) Date de publication de la demande: **12.08.1998**
(21) Numéro de dépôt: 98400227.9
(22) Date de dépôt: 04.02.1998
(51) Int. Cl.: C01D 3/22, C01D 3/24, C01D 3/06, A23L 1/237

(54) **Procédé de fabrication de sel**

(30) Priorité: 06.02.1997 FR 9701370; 25.03.1997 FR 9703631
(71) Demandeur: Saline d'Einville, 54370 Einville (FR)
(72) Inventeur: Martin, Gabriel, 94230 Cachan (FR)
(74) Mandataire: Ballot, Paul

(57) **Abrégé**

L'invention se rapporte à des pétales de sel et à leur procédé de fabrication. Le procédé d'obtention est réalisé à partir de saumure saturée en chlorure de sodium en milieu non agité, et il consiste à :
- évaporer la saumure,
- provoquer la cristallisation des pétales de sel à une température comprise entre 50 et 80°C pendant une durée comprise entre 1 heure et 3 heures,
- récupérer les pétales de sel ayant cristallisé et les laisser égoutter pendant une durée de 2 heures,
- sécher les pétales de sel récupérés à une température comprise entre 30°C et 50°C pendant une durée comprise entre 18 heures et 30 heures.

Les pétales de sel obtenus se présentent sous forme de plaquettes (50) constituées par un assemblage de pyramides creuses à base carrée (40), elles-mêmes formées par un assemblage de cubes.

## Description

La présente invention se rapporte à un procédé de fabrication de pétales de sel.

Le sel cristallisé est actuellement fabriqué soit de manière artisanale dans les marais salants, soit de manière industrielle dans les salines. La fabrication dans les marais salants consiste en une évaporation lente de la saumure, sous l'effet du soleil, et donc en un enrichissement en continu des bassins en chlorure de sodium.

L'évaporation lente de la saumure permet de cristalliser dans un premier temps, au bout d'une durée comprise entre 10 et 20 heures, de la fleur de sel. Cette fleur de sel cristallise dans le système cubique et se forme à la surface de l'eau. Elle est très fragile et sa croissance est entièrement tributaire du soleil. Elle se présente sous forme de cubes élémentaires isolés ou accolés de manière aléatoire.

Une fois récoltée, la fleur de sel est disposée dans des sacs en toile de jute pendant quelques jours pour être séchée à l'air. Le produit final obtenu renferme cependant encore beaucoup d'humidité, de l'ordre de 9% à 11%.

Par ailleurs, la fleur de sel étant un sel de mer, elle est riche en insolubles, c'est-à-dire en composés organiques provenant essentiellement des algues. Elle contient également des oligo-éléments, tels que le magnésium, le calcium, le potassium, des sulfates ou des carbonates, en quantités importantes.

La fleur de sel des marais salants se présente donc sous forme de beaux cristaux cubiques et renferme des taux élevés en oligo-éléments, ce qui la rend attractive sur le plan commercial. Cependant, sa production étant relativement faible, puisque tributaire des conditions climatiques, et notamment du soleil, elle reste très coûteuse.

La fabrication dans les salines consiste à évaporer de la saumure extraite par pompage de nappes salées souterraines naturelles ou alors obtenue par injection d'eau dans un gisement de sel gemme. Pour réaliser cette évaporation, plusieurs méthodes sont utilisées selon que l'on souhaite élaborer un sel fin ou du gros sel.

Une première méthode, permettant l'élaboration du sel fin, est effectuée en milieu agité en portant la saumure à ébullition pour provoquer une cristallisation instantanée du sel. La croissance des cristaux de sel a par exemple lieu dans un cristallisoir, dans lequel règne un léger vide. Le chauffage est régulé par un évaporateur.

Une deuxième méthode, permettant l'obtention de gros sel, est effectuée en milieu non agité. Des serpentins, destinés à faire circuler de la vapeur, sont placés dans des bassins remplis de saumure de manière à permettre l'évaporation de cette dernière. Ainsi, les serpentins se substituent au soleil. Les bassins sont par ailleurs régulièrement réalimentés en saumure pour que la cristallisation puisse se faire en continu.

La cristallisation du gros sel est très longue puisqu'elle s'étale sur une durée comprise entre 24 heures et quelques jours, à une température comprise entre 85°C et 90°C. Le gros sel cristallisé est récupéré dans le fond des bassins puis séché sur un lit fluidifié à une température de l'ordre de 120°C pendant 2 à 3 minutes.

Ces techniques industrielles d'obtention de sel ne sont pas tributaires des conditions climatiques si bien qu'elles permettent d'élaborer du sel cristallisé avec un rendement bien supérieur à celui des marais salants.

La fleur de sel n'a cependant jamais pu être obtenue de manière industrielle, dans les salines. Un but de la présente invention est donc de fabriquer industriellement l'équivalent de cette fleur de sel, que l'on appellera par la suite pétales de sel, avec un rendement supérieur à celui des marais salants.

Un autre but de l'invention est d'obtenir un produit final d'une part pratiquement dépourvu d'humidité, ou en tout cas renfermant un taux en humidité bien inférieur à celui de la fleur de sel, et d'autre part riche en oligo-éléments, avec des taux comparables à ceux de la fleur de sel.

La présente invention concerne donc un procédé de fabrication de pétales de sel à partir de saumure saturée en chlorure de sodium, caractérisé en ce qu'il est réalisé en milieu non agité et en ce qu'il consiste à :
- évaporer la saumure,
- provoquer la cristallisation des pétales de sel à une température comprise entre 50°C et 80°C pendant une durée comprise entre 1 heure et 3 heures,
- récupérer les pétales de sel ayant cristallisé et les laisser égoutter pendant une durée de 2 heures,
- sécher les pétales de sel récupérés à une température comprise entre 35°C et 50°C pendant une durée comprise entre 18 heures et 30 heures.

De préférence, la température de cristallisation est comprise entre 60 et 70°C et la durée de cristallisation est de 2 heures. La température de séchage quant à elle, est de préférence égale à 40°C tandis que la durée de séchage est de 24 heures.

Selon une autre caractéristique de l'invention, la récupération des pétales de sel ayant cristallisé est effectuée au moyen de plaques immergées dans la saumure à une profondeur comprise entre 10 et 20 cm.

Selon une autre caractéristique de l'invention, le séchage des pétales de sel est effectué dans une armoire ventilée.

L'invention se rapporte par ailleurs à des pétales de sel obtenus selon ce procédé, caractérisés en ce qu'ils se présentent sous forme de plaquettes constituées par un assemblage de pyramides creuses à base carrée, les pyramides étant elles-mêmes formées par un assemblage de cubes.

Un dernier objet de l'invention se rapporte à une installation de mise en oeuvre du procédé de fabrication de pétales de sel. Cette installation comprend :
- des bassins remplis de saumure dans lesquels sont positionnés des serpentins aptes à faire circuler de la vapeur destinée à provoquer l'évaporation de la saumure,
- des plaques constituées de toile d'acier inoxydable, immergées dans la saumure, permettant de récupérer les pétales de sel cristallisés,
- une armoire ventilée destinée à effectuer le séchage des pétales de sel.

De préférence les plaques sont immergées dans la saumure à une profondeur comprise entre 10 et 20 cm.

Le procédé de fabrication selon l'invention permet d'obtenir des pétales de sel avec un rendement bien supérieur à celui des marais salants.

Par ailleurs, les pétales de sel fabriqués par le procédé selon l'invention ne se présentent pas, contrairement à ce que l'on pouvait penser, sous la même forme que celle de la fleur de sel des marais salants. Leur structure est en effet plus complexe qu'un simple accolage de cubes puisqu'ils se présentent sous forme de plaquettes constituées par un assemblage de pyramides creuses à base carrée, elles-mêmes formées par assemblage de cubes.

Les pétales de sel obtenus présentent une solubilité et une friabilité accrues et sont très peu denses. Il renferment d'autre part des taux en oligo-éléments supérieurs à ceux d'un sel minéral élaboré par une technique classique de fabrication industrielle, et comparables à ceux de la fleur de sel des marais salants.

D'autres particularités et avantages de l'invention apparaîtront à la lecture de la description faite à tire d'exemple non limitatif en référence aux figures annexées qui représentent :
- la figure 1, un schéma d'une vue de dessus de la structure d'une pyramide creuse isolée constituée par un assemblage de cubes,
- la figure 2, un schéma d'un pétale de sel constitué par un assemblage de pyramides du type de celle de la figure 1.

La présente invention consiste donc à réaliser industriellement des cristaux de sel présentant des propriétés semblables à celles de la fleur de sel. Les cristaux de sel sont élaborés à partir d'une saumure qui est par exemple obtenue par injection d'eau dans un gisement de sel gemme.

Dans un exemple préféré de réalisation, le procédé de fabrication de pétales de sel selon l'invention est réalisé en milieu non agité. Il consiste, dans une première étape, à évaporer la saumure. Pour cela, des serpentins destinés à faire circuler de la vapeur sont placés dans des bassins remplis de cette saumure. Les bassins sont régulièrement réalimentés en saumure, pour éviter qu'ils ne s'assèchent. Ainsi, le niveau de saumure dans les bassins est maintenu constant.

Une deuxième étape consiste ensuite à cristalliser les pétales de sel. De manière avantageuse, la température de cristallisation est comprise entre 50 et 80°C, de préférence entre 60 et 70°C. La durée de cristallisation est par ailleurs considérablement abaissée par rapport à celle d'un procédé classique d'obtention de sel puisqu'elle est comprise entre 1 heure et 3 heures. Elle est de préférence égale à 2 heures. Cette deuxième étape permet d'initier la formation des pétales de sel.

De manière avantageuse, des plaques constituées par une toile d'acier inoxydable, dont la surface des mailles est égale à une valeur comprise entre 1 et 2 mm², de préférence à 1,5 mm², sont immergées dans la saumure à une profondeur comprise entre 10 et 20 cm. Elles sont par exemple immergées à 12 cm de profondeur. Ces plaques permettent de récupérer les pétales de sel cristallisés qui ont tendance à tomber vers le fond des bassins lorsque les forces de capilarité, permettant de maintenir ces pétales à la surface de la saumure, ne suffisent plus à compenser leur poids. En effet les mailles de la toile sont suffisamment serrées pour retenir les cristaux de sel et éviter qu'il ne tombent au fond du bassin.

Lorsque le sel a cristallisé, les plaques recouvertes de cristaux sont sorties des bassins puis laissées à égoutter pendant une durée de deux heures.

La dernière étape, destinée à finaliser la formation des pétales de sel, consiste à placer les plaques égouttées et recouvertes de cristaux de sel dans une armoire ventilée afin d'effectuer un séchage. La température à l'intérieur de cette armoire est maintenue constante à une valeur comprise entre 30°C et 50°C, de préférence à 40°C. De manière avantageuse, la durée du séchage s'étale sur une durée comprise entre 18 et 30 heures, de préférence sur 24 heures. Cette étape de séchage est très importante non seulement pour obtenir un taux d'humidité relativement bas, mais aussi pour finaliser et consolider la formation des pétales de sel selon un arragement particulier décrit ci-dessous.

Les pétales de sel obtenus par le procédé selon l'invention se présentent en effet sous une forme inattendue très particulière et plus complexe que celle de la fleur de sel des marais salants. Contrairement à ce que l'on pouvait penser, les pétales de sel ne se présentent pas sous forme de cubes isolés ou accolés de manière aléatoire. En fait, ils cristallisent dans le système cubique, mais les cubes élémentaires formés subissent aussitôt un arrangement particulier très ordonné : ils s'assemblent pour former des pyramides creuses à base carrée, lesquelles sont ensuite assemblées pour former des plaquettes.

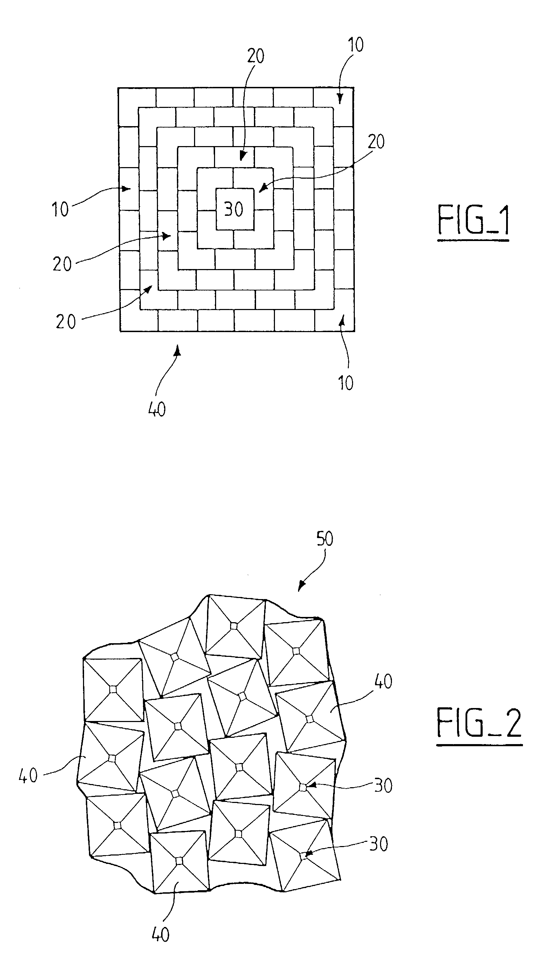

Dans le procédé selon l'invention, l'étape de cristallisation permet donc d'une part de réaliser des pyramides creuses à base carrée par assemblage de cubes, telles qu'illustrées sur la figure 1, et d'autre part d'assembler les pyramides creuses sous forme de plaquette telles qu'illustrées sur la figure 2. La formation des plaquettes est en fait dûe à une sursaturation qui s'opère juste à la surface de la saumure. Cette sursaturation permet en effet aux pyramides creuses de s'assembler dans le plan de la surface pour former des plaquettes. L'étape de séchage, quant à elle, permet de consolider la structure des pétales en complétant l'accolage des pyramides creuses entre-elles.

Il est à noter que les techniques classiques de fabrication industrielle n'ont permis, jusqu'à présent, d'obtenir que trois sortes de cristaux de sel. Une première sorte, la plus classique, consiste en des cristaux de sel ignigène cubiques.

D'autres cristaux en forme de petites trémies isolées ont également pu être synthétisés. Cependant, ces cristaux sont peu fréquents et sont, en tous cas, synthétisés en quantités bien inférieures à celles des cristaux cubiques.

Il est en outre possible d'élaborer une troisième sorte de cristaux en contrariant l'orientation de la cristallisation, au moyen de substances rajoutées à la saumure préalablement à la cristallisation, pour obtenir des sels dendritiques. Les cristaux de ces sels dendritiques sont alors orientés selon une structure arborescente ramifiée à la manière de cristaux de givre. Il est cependant nécessaire, dans ce cas, de contrôler en permanence les ajouts des substances destinées à favoriser l'orientation particulière des sels dendritiques. En effet, si leur taux est trop faible ou trop élevé, la cristallisation ne peut se faire correctement et la qualité des cristaux obtenus s'en trouve dégradée.

Dans la présente invention, l'étape de cristallisation permet de synthétiser de très grandes quantités de petits cristaux en forme de trémies (figure 1). Ces cristaux sont prépondérants dans la saumure et leur formation ne nécessite pas l'ajout de substances particulières. Du fait de la sursaturation de la saumure en surface, les trémies s'assemblent ensuite, dans le plan de cette surface, pour former des plaquettes, encore dénommées pétales (figure 2).

L'étape de séchage permet alors de consolider l'assemblage des trémies, ce dernier constituant la base de la structure des pétales.

L'orientation particulière des pétales de sel obtenus par le procédé selon l'invention est d'autant plus surprenante qu'aucune substance, destinée à favoriser une orientation privilégiée lors de la cristallisation, n'a été rajoutée. Le fait de ne pas ajouter de telles substances pour obtenir les pétales de sel selon l'invention est très avantageux car cela facilite le procédé. En effet, il n'est pas nécessaire, dans ce cas, d'effectuer un contrôle des ajouts.

La figure 1 illustre un schéma d'une vue de dessus d'une pyramide 40 creuse isolée, à base carrée, formée par un empilement de cubes élémentaires lors de l'étape de cristallisation.

La base de la pyramide est formée par plusieurs cubes élémentaires 10 accolés de manière à former le contour d'un carré. D'autres cubes élémentaires 20 sont ensuite empilés les uns sur les autres au-dessus de cette base carrée de manière à former des gradins. Le sommet de la pyramide à gradins est constitué par un seul cube élémentaire 30. Les cubes ainsi empilés forment les parois de la pyramide, tandis que l'intérieur est creux.

Les pétales réalisés par le procédé selon l'invention se présentent sous forme de plaquettes, tel que schématisé sur la figure 2. Les plaquettes 50 sont formées par accolage, ou même par enchevêtrement, des pyramides creuses 40. Les enchevêtrements de pyramides ne sont pas représentés sur le schéma de la figure 2. Ces beaux assemblages de pyramides sont par ailleurs bien visibles à l'oeil nu, ce qui rend les pétales très attrayant sur le plan commercial.

De manière avantageuse, les pétales ainsi réalisés contiennent en moyenne 4% d'humidité. Ce taux est nettement meilleur que celui de la fleur de sel des marais salants qui est élevé, de l'ordre de 10%.

Par ailleurs, après avoir effectué un deuxième séchage des pétales de sel, pour obtenir un taux d'humidité de l'ordre de 0,2%, leur densité a été mesurée. Cette densité est très peu élevée et comprise entre 0,28 et 0,34. A titre de comparaison, un sel obtenu à partir de la même saumure, mais fabriqué selon un procédé classique, présente une densité comprise entre 0,8 et 1,0.

De plus, de par leur structure et leur mode d'obtention, les pétales de sel selon l'invention possèdent une solubilité, une vitesse de dissolution et une friabilité accrues par rapport à la fleur de sel et aux sels élaborés à partir d'un procédé classique.

Enfin, les pétales de sel ainsi réalisés possèdent des taux en oligo-éléments, tels que magnésium, calcium, potassium, sulfates ou carbonates, pratiquement comparables à ceux de la fleur de sel des marais salants et, en tout cas, bien supérieurs aux taux des sels minéraux obtenus à partir des procédés classiques. Ainsi, alors qu'un sel minéral classique comporte en moyenne environ 0,002% de magnésium et 0,02% de calcium, un pétale de sel comporte des teneurs en magnésium comprises entre 0,08% et 0,15%, des teneurs en calcium comprises entre 0,08% et 0,15% et des teneurs en potassium comprises entre 0,07% et 0,1%. Le fait d'élaborer des pétales de sel aussi riches en oligo-éléments est également très intéressant sur le plan commercial.

Enfin, du fait que les pétales de sel élaborés sont uniquement minéraux, ils sont, contrairement à la fleur de sel, pauvres en insolubles. Les insolubles sont en effet tous les dérivés organiques, provenant notamment des algues, qui composent la fleur de sel.

## Revendications

1. Procédé de fabrication de pétales de sel à partir de saumure saturée en chlorure de sodium, caractérisé en ce qu'il est réalisé en milieu non agité et en ce qu'il consiste à :
- évaporer la saumure,
- provoquer la cristallisation des pétales de sel à une température comprise entre 50 et 80°C pendant une durée comprise entre 1 heure et 3 heures,
- récupérer les pétales de sel ayant cristallisé et les laisser égoutter pendant une durée de 2 heures,
- sécher les pétales de sel récupérés à une température comprise entre 30°C et 50°C pendant une durée comprise entre 18 heures et 30 heures.

2. Procédé selon la revendication 1, caractérisé en ce que la température de cristallisation est comprise entre 60 et 70°C.

3. Procédé selon l'une des revendications 1 à 2, caractérisé en ce que la durée de cristallisation est de 2 heures.

4. Procédé selon l'une des revendications 1 à 3, caractérisé en ce que la température de séchage est égale à 40°C.

5. Procédé selon l'une des revendications 1 à 4, caractérisé en ce que la durée de séchage est de 24 heures.

6. Procédé selon l'une des revendications 1 à 5, caractérisé en ce que la récupération des pétales de sel ayant cristallisé est effectuée au moyen de plaques immergées dans la saumure à une profondeur comprise entre 10 et 20 cm.

7. Procédé selon l'une des revendications 1 à 6, caractérisé en ce que le séchage des pétales de sel est effectué dans une armoire ventilée.

8. Pétales de sel obtenu selon le procédé de la revendication 1, caractérisés en ce qu'ils se présentent sous forme de plaquettes (50) constituées par un assemblage de pyramides creuses à base carrée (40), elles-mêmes formées par un assemblage de cubes (10, 20, 30).

9. Pétales de sel selon la revendication 8, caractérisés en ce que leur densité est comprise entre 0,28 et 0,34.

10. Installation de mise en oeuvre du procédé selon la revendications 1, caractérisée en ce qu'il comprend :
- des bassins remplis de saumure, dans lesquels sont positionnés des serpentins aptes à faire circuler de la vapeur destinée à provoquer l'évaporation de la saumure,
- des plaques constituées de toile d'acier inoxydable immergées dans la saumure et permettant la récupération des pétales de sel cristallisés,
- une armoire ventilée destinée à effectuer le séchage des pétales de sel.

11. Installation selon la revendication 10, caractérisée en ce que les plaques sont immergées dans la saumure à une profondeur comprise entre 10 et 20 cm.
